# EUROPEAN PATENT APPLICATION

(11) **EP 2 183 980 A1**
(43) Date of publication of application: **12.05.2010**
(21) Application number: 08168739.4
(22) Date of filing: 10.11.2008
(51) Int. Cl.: A23G 9/48

(54) **Composite frozen confectionery providing enhanced refreshment**

(71) Applicant: Nestec S.A., 1800 Vevey (CH)
(72) Inventor: Puaud, Max, 60860, PISSELEU (FR); Jiraruangkiat, Sirichit, 78112, FOURQUEUX (FR); Littoz-Baritel, François-Xavier, 74950, SCIONZIER (FR); Dose, Steffen, BACKERSFIELD, 93311 (US)
(74) Representative: Baumgartner Harris, Pauline

(57) **Abstract**

The present invention relates to composite frozen confectioneries providing an enhanced refreshing sensation upon consumption, said confectioneries comprising a soft core of aerated ice confection preferably comprising a refreshing block and a crispy ice coating. The invention also concerns a method for the manufacture of said composite frozen confectioneries.

## Description

### Field of the invention

The present invention relates to a refreshing composite frozen confectionery preferably a bite-sized product, formed by a soft core of aerated ice confection coated with a crispy aqueous-based ice layer. The core preferably comprises a refreshing block. The invention is further directed to a method for manufacturing said composite frozen confectionery.

### Background of the invention

Composite frozen confectioneries comprising a core and a fat-based coating are widely described in the literature. In particular bite-sized products with a fat-based coating are known. These products cannot be qualified as "refreshing" as they leave a typical fatty feeling in the mouth after being consumed.

Composite frozen desserts made of an ice confection core and an aqueous-based coating are also known in the art. WO 0130175 describes for instance an aqueous-based coating for ice confections including sorbets. The coating there-described is based on a water-ice solution typically comprising sugars, stabilisers, fruit solids, citric acids, colours and water. Although fat-free, this type of coating contains a sugar level which usually leaves the consumer with a "thirst" sensation after consumption.

On the other hand, bite-sized water-ice products, also referred to as "ice balls", are known to the consumer. Again these products contain sweetener agents and are not delivering intense refreshment. Furthermore, these products very small in size, have a hard texture in mouth. Their format and composition are not appropriate to deliver a refreshing experience.

Therefore, frozen confectioneries known up to date, although cold when distributed and consumed, have not been able to provide the consumer with a real refreshing experience, combined with a pleasant texture.

The present invention solves this problem and provides frozen confectioneries delivering a real freshness experience in the mouth together with a unique texture.

### Object of the invention

A first object of the invention is a composite frozen confectionery made of a soft core preferably improved by the presence of a refreshing block and surrounded by a crispy aqueous-based shell, which delivers real refreshment associated with a soft texture in mouth. What is meant by "real refreshment" is both mouth and mental refreshment with a sensation of "clean mouth" after consumption, avoiding any fatty or sweet aftertaste.
A second object of the invention is a method for the preparation of such frozen confectionery.

### Summary of the invention

The present invention relates, in a first aspect, to a composite frozen confectionery comprising
a) a soft aerated ice confection core preferably including a refreshing block, wherein the maximum force used to penetrate a knife in said core at -10°C is 100 Newton, preferably 50 Newton, and more preferably 20 Newton; and
b) a crispy aqueous-based ice shell, substantially free of sugars and fat.

Preferably, the composite frozen confection of the invention is bite-sized, with a volume comprised between 2 and 10 ml.

In a further aspect, the invention relates to a method for the manufacture of a composite frozen confectionery as defined above, comprising the steps of:
**i)** Providing an ingredient mix for ice confection preferably comprising a refreshing block;
**ii)** Freezing and aerating said mix;
**iii)** Dosing portions of the frozen mix to form frozen ice confections;
**iv)** Hardening the frozen ice confections
**v)** Providing frozen ice confections with an aqueous-based coating, substantially free of fat and sugars to form composite frozen confectioneries
**vi)** Hardening the composite frozen confectioneries

### Figures

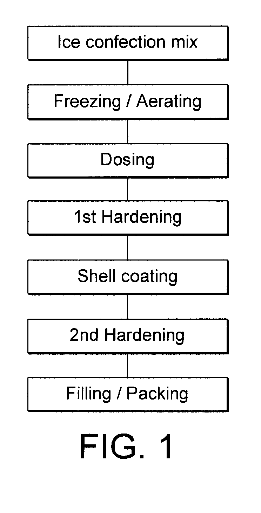

- Figure 1 schematises in a block diagram the method for the manufacture of a composite frozen confection according to the present invention.
- Figure 2 shows the results of a penetrability test performed in bulk format on an aerated ice confection core from the composite frozen confectionery of the invention, compared with an ice ball type product. The graphs represent the force (in Newton) used to penetrate a knife in a product at -10°C as a function of the distance of penetration in the product.

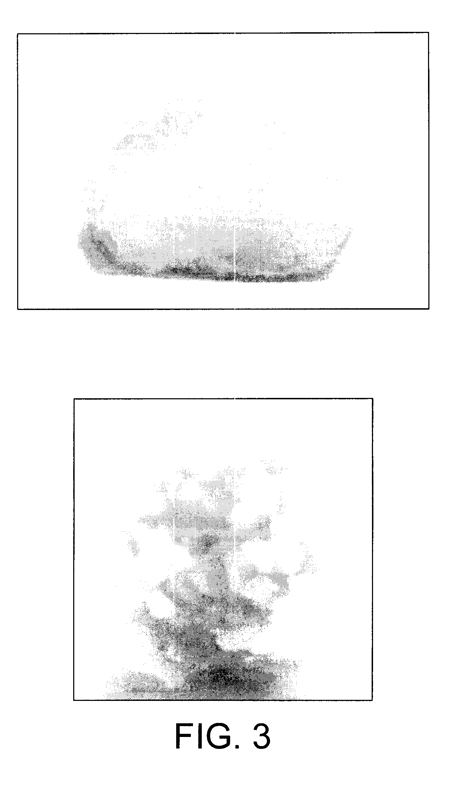

- Figure 3 is a view of two embodiments of composite frozen confections according to the invention.

### Detailed description of the invention

The present invention is concerned with a composite frozen confectionery providing a new experience to the consumer in terms of improved refreshing sensation upon and after consumption, associated with a very pleasant texture in mouth.

Advantageously, it has been found that during the consumption of a frozen confectionery according to the invention, the consumer first experiences hydration and cleaning of the mouth through the quick melting of the crispy aqueous-based shell substantially free of fat and sugars, followed by a lasting refreshment experience provided by the melting of the soft core preferably including a refreshing block.

The composite frozen confection according to the invention advantageously overcomes fatty feelings usually perceived during, and lasting after consumption of ice cream bite-sized products. The sweet sensation is also limited, in order to avoid any thirst sensation after consumption. Above all, the specific combination of the aqueous-based shell and core leaves the consumer with a "clean mouth" effect.

In a preferred embodiment of the invention, the frozen confectionery is in the form of a bite-sized confection or "miniature", with a volume typically comprised between 2 ml to 10 ml.

The composite frozen confectioneries can adopt various shapes, such as drops, spheres, cylinders, cubes, pyramids, sticks, triangles, diamonds/losanges or cones.

The composite confectionery is made of a soft aerated ice confection core covered by an aqueous-based ice crispy shell.

Non limiting examples of "aerated ice confection" within the meaning of the present invention include ice cream, sorbet, sherbet, water ice, frozen yoghurt, frozen dairy, soft ice, Mellorine, frozen custard, non-dairy frozen confection, milk ice, ice lolly, gelato and frozen jelly.

Preferably, the aerated ice confection is a sorbet.

Aeration can be comprised between 10% and 200%, preferably between 10% and 50%.

The aerated ice confection core composition is preferably characterised by the presence of a refreshing block.

By "refreshing block" is to be understood a composition that comprises at least one salivating agent and at least one cooling agent in a weight ratio of 1:0.05 to 1:0.2, preferably 1:0.11 and 1:0.16.

By "salivating agent" is to be understood any agent that induces salivation or a salivating reflex. It may also be described as a mouth watering, mouth wetting or mouth hydrating agent.

The salivating agent used in the present invention may be selected from a mixture of compounds comprising at least one organic acid selected from the group of adipic, ascorbic, citric, fumaric, lactic, malic and tartaric acids. These compounds stimulate salivary glands and thus enhance salivary flow. Such mixtures are commercially available, for example under the name of mouth watering flavouring.

By "cooling agent" is to be understood any agent that imparts a cooling sensation to the skin and mucous membranes of the body, particularly the mouth, nose, throat and gastrointestinal tract during consumption. Cooling agents are known in the art, for example from US 7,090,832.

The cooling agent used in the present invention may be selected from menthol derivative compounds, acyclic and/or cyclic carboxamides, N-substituted paramenthane carboxamides, phosphine oxides, substituted p-menthanes, menthoxypropane, alpha-keto enamine derivatives, N-substituted p-menthane carboxamide, menthyl half acid ester derivatives, cubebol etc. Preferably, the cooling agent is a compound mixture comprising at least a menthol carboxamide compound.

According to another embodiment of the invention, the core of the composite frozen confectionery may further comprise a tingling agent.

By "tingling agent" is to be understood agents which trigger a trigeminal perception. These tingling agents may be selected from a plethora of compounds (plant extracts or synthetic compounds) that are known in the art to provide a tingling sensation and are used accordingly in a number of food products. Such plant extracts include extracts from pepper, onion, garlic, radish, horseradish, mustard, chilli, ginger etc. These may more precisely include, but are not limited to Jambu Oleoresin or para cress (*Spilanthes sp.*) in which the active ingredient is Spilanthol; Japanese pepper extract (*Zanthoxylum peperitum*), including the ingredients known as Saanshool-I, Saanshool-II and Sanshoamide; black pepper extract (*piper nigrum*), including the active ingredients chavicine and piperine; Echinacea extract; Northern Prickly Ash extract; and red pepper oleoresin.

Preferably, the core of the composite frozen confectionery comprises the salivating agent in an amount of 0.1-0.5 wt%, preferably 0.25-0.4 wt%, more preferably 0.28-0.35 wt%. The cooling agent is present in the frozen dessert of the invention in an amount of 0.01-0.1 wt%, preferably 0.02-0.05 wt%, more preferably 0.02-0.045 wt%, even more preferably 0.03-0.045 wt%, most preferably 0.032-0.045 wt%.

The ice confection core in the invention may further comprise a mixture of malic acid and citric acid. This helps providing an organoleptic balance between sweetness and acidity in the final product.

If a tingling agent is used, it is preferably used in an amount of 0.01-0.05 wt% of the ice cream or sorbet core.

It has also been found that the presence of a mucoadhesive agent in the composition of the core of the composite frozen confectionery is advantageous in the present invention. Indeed, mucoadhesive polymers such as hydroxypropylmethylcellulose (HPMC) and carboxymethylcellulose (CMC) have been shown to further enhance the salivating sensation after consumption. Preferably, the mucoadhesive agent used in the present invention is CMC. When it is used in the aerated ice confection core of the invention, it is preferably added at an amount of about 0.05-0.5%, preferably 0.1-0.3%, most preferably about 0.1%.

In one embodiment, the core of the composite frozen confectionery consists in a sorbet. By sorbet it is meant an aerated frozen dessert with fruit addition. Preferably, the sorbet core includes a refreshing block in amounts comprised between 0.2 and 0.5 wt% of the composition.

Preferably, the aerated sorbet core further includes sugars or sweetening agents in a range comprised between 16% and 20% by weight; fruit and fruit juice in a range comprised between 1.5 and 4% by weight of the core composition, stabilizers in a range comprised between 0.22 and 0.32% by weight.

The sorbet core has an overrun typically comprised between 10% and 50% . The sorbet core may further comprise acidic fruity ingredients, flavours and colours. These may be pieces of acidic fruits such as citrus fruits, peach, grapefruit, etc. or the juice of said fruits or pulp, or combinations thereof. These ingredients further enhance the refreshing sensation by providing specific fruity olfactory notes.

In another embodiment, the core of the composite frozen confectionery consists in an ice cream. In addition to the refreshing block, the latter comprises typical ingredients known from a skilled person in the art and described in reference books such as Ice Cream, 5th Edition, by Robert T. Marshall and W.S. Arbuckle*,* including fat, milk solids non fat, sweetening agents, stabilizers and emulsifiers. Typical ranges for the mentioned ingredients are:
Fat : 1 - 10% by weight in the aerated ice confection core
MSNF: 2 - 10% by weight in the aerated ice confection core
Sweetening: 12 - 16% by weight in the aerated ice confection core
Stabilizer: 0.2 - 0.8% by weight in the aerated ice confection core
Emulsifier: 0.01 - 0.1% by weight in the aerated ice confection core

The aerated ice confection core is also characterised by its unique softness. The texture of the core in the frozen composite confectionery of the invention is soft and advantageously contrasts with the crispiness of the shell first experienced in the mouth. It has been found that the combination of the textures provided by the composite confectionery of the invention is particularly appreciated by the consumer. While the crispy shell quickly melts with the effect of hydrating and cleaning the mouth, the soft core remains longer in the mouth extending the refreshing sensation, without leaving any thirst impression.

The softness of the core can be measured by a penetrability test. According to the invention the maximum force used to penetrate a knife in the aerated ice confection core at -10° is 100 Newton, preferably 50 Newton and more preferably 20 Newton.

In the composite frozen confectionery of the invention, the soft core of aerated ice confection is surrounded by an aqueous-based crispy shell covering at least partially and preferably entirely the core. The shell is substantially free of sugars and fat.

Sugars, as defined in "Diet, nutrition and the prevention of chronic diseases" - Report of a Joint WHO/FAO Expert Consultation, WHO Technical Report Series 916, WHO, Geneva, 2003 include all mono and disaccharides added by the manufacturer, cook, or consumer i.e. "free sugars", plus sugar naturally present and sourced from honey, syrups and juices.

The water shell has a harder texture than the core and therefore provides the consumer with a cracking perception in mouth which adds a texture contrast to the product.

Its composition substantially free of sugar and fat contributes to the overall refreshing sensation provided by the composite frozen confectionery of the invention and also contributes to the "clean mouth" effect perceived and the absence of thirst sensation after consumption.

In a particular embodiment, the shell essentially consists in water.

In another embodiment, the shell comprises water, flavouring and colouring agents, and stabilisers.

Examples of stabilisers include guar gum, xanthan gum, carageenan, locust bean gum, sodium alginate, and CMC.

Preferably, the shell is a thin layer with a thickness comprised between 300 µm and 600 µm. This characteristic advantageously provides reasonable heat shock stability to the product.

In a specific embodiment, further to the shell surrounding the ice confection core, the composite product comprises an additional continuous or discontinous layer made of ice crystals covering the shell. Preferably, the ice crystal size of this additional layer is bigger than 1mm.

Having ice crystals as additional layer is boosting up contrast texture sensation, and enhances refreshing and clean mouth effect.

The present invention is further directed to a method for the manufacture of a composite frozen confectionery as defined above, comprising the steps of:
i) Providing an ingredient mix for ice confection preferably comprising a refreshing block;
ii) Freezing and aerating the mix;
iii) Dosing portions of the mix with a defined shape;
iv) Hardening the frozen ice confection;
v) Applying an aqueous-based coating substantially free of sugar and fat, covering partially or totally the ice confection to provide a crispy shell surrounding the ice confection;
vi) Hardening the obtained composite frozen confectionery.

The ingredient mix is based on standard ingredients used for the preparation of an ice confection and well known from a skilled person in the art. Additionally, it preferably comprises a refreshing block as defined above. The ingredient mix provided at a temperature typically below 4°C is cooled and aerated in a standard freezer at temperatures typically comprised between -3 and -4°C. Overrun can be comprised between 10 and 200%, preferably between 10 and 50%. It is necessary to ensure that proper level of overrun with homogeneous aeration is obtained and maintained consistently to ensure the softness of ice confection core.

The frozen mix is further dosed in portions with a defined shape. Any dosing equipment can be used to perform this step such as, for instance an extruder or moulding equipment.

In a particular embodiment wherein the method is directed to the preparation of bite-sized products, i.e. individual portions in specific pattern, a dosing apparatus which enables dosing a pattern of ice confection to a continuously transported tray can advantageously be used. Such equipment is for instance described in EP 0741972, here included by reference.

Further to the hardening of the aerated frozen confection core, the latter is coated with the aqueous-based composition. Methods to coat the soft core include enrobing, dipping, spraying, water fall or curtain, showering or bottoming.

Preferably the shell is applied by spraying, bottoming or water fall.

In a particular embodiment, the aqueous-based coating is followed by addition of ice crystals covering at least partially the surface of the composite product.

The coated product goes then through a second hardening step.

The invention will now be further described by way of the following examples which should not be considered as limiting the invention.

### Examples

### Example 1

A composite frozen confection was prepared based on the following composition:
1) sorbet core composition

| Ingredient | % by weight |
|---|---|
| Stabilizers | 0.27 |
| Sucrose | 18.00 |
| Citric acid | 0.40 |
| Lemon juice concentrate | 2.00 |
| Refreshing block* | 0.35 |
| Flavour | 0.03 |
| Colour | 0.0008 |
| Water | made to 100 |

| | % by weight in sorbet core composition |
|---|---|
| Mouth watering agent | 0.25 |
| Cooling agent | 0.05 |
| Tingling agent | 0.05 |

| | |
|---|---|
| * composition of the refreshing block: | |

The mix of ingredients was stored homogenised, pasteurized at standard conditions before being stored at a temperature below 4°C. The mix was then cooled and aerated in a freezer with temperature comprised between -3 and - 4°C, under a pressure comprised between 3 and 5 bars and a flow rate comprised between 150 and 160L/h. An overrun of 20% was provided.

The sorbet core composition was then dosed in individual portions by passage through an extruder equipped with a dosing head onto a conveyor belt. An equipment similar to that described in EP0141972 was used.

After a passage through hardening tunnel each individual frozen core was coated with pasteurised water at a temperature below 4°C.

A second passage in a hardening tunnel finalized the process.

### Example 2

A comparative hardness test between the core of a composite frozen confectionery according to the invention and an "ice ball" type of product has been performed.
A sorbet core composition as described in Example 1 was used as sample a)
An ice ball product comprising water, sugars, lime juice, citric acid, sodium cyclamate, flavouring, and colouring was used as sample b)
Ice ball composition:

| Ingredient | % by weight |
|---|---|
| Liquid sugar 65% | 15.00 |
| Sodium cyclamate | 0.06 |
| Citric acid | 0.65 |
| Flavour Lime | 0.25 |
| Colour | 0.04 |
| Lime juice | 2.50 |
| Water | 81.50 |

Ice ball manufacturing process:
i) Providing an ingredient mix for ice ball;
ii) Reaching freezer drum to produce ice flakes;
iii) Feeding ice flakes to ball former;
iv) Filling ice balls into the container;
v) Hardening the ice balls.

### Hardness measurement and process parameters:

The hardness index is defined as the force to penetrate the sample with the metal knife-like probe.

The method is based on the resistance of both products to the penetration (20mm: fixed depth) of a knife-like probe, using a texture analyser TA-XT2i of SMS.
In this example, each product was tested at a temperature of -10°±1°C with 5 repetitions.
The maximum force was then plotted against the temperature.

### Equipment:

Horizontal deep freezer was used for sample preparation with uniform and programmable temperature.

### Sample preparation:

In order to compare the hardness of both recipes, both products were prepared in bulk to eliminate the effects from different formats.
The samples' surface was ensured to be plane. The samples were then placed inside the freezer conditioned at the temperature of analysis (-10°C±1°).
The analyses were performed 16 hours later. Measurements were performed at room temperature. The maximum force was plotted against temperature.

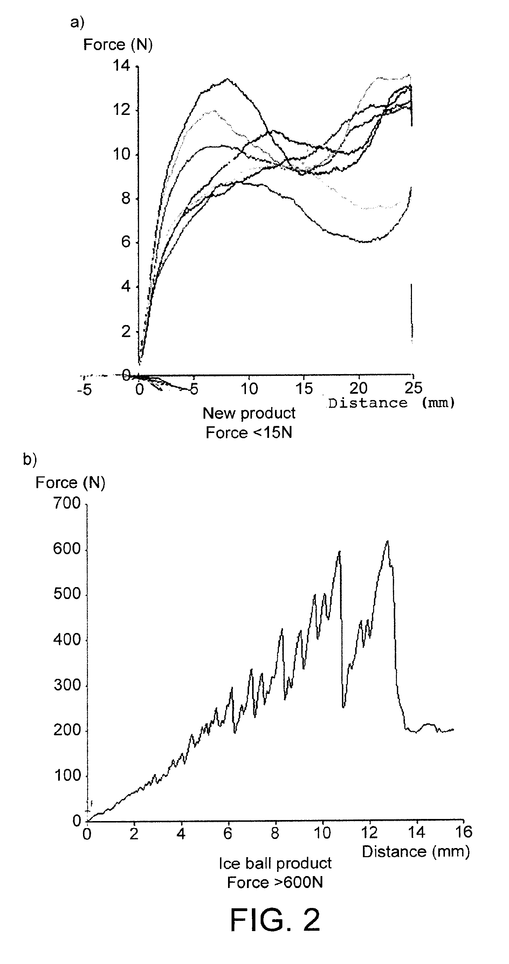

### Results are shown on Figure 2a) and 2b)

### Example 3

The refreshing sensation provided by the composite frozen confections according to the invention was compared with the refreshment provided by an "ice ball" type of product on 156 consumers.

Consumers tested a composite frozen confection as described in Example 1 and an ice ball confection as described in Example 2. The following questions were independently asked:
1) what is your overall opinion on the refreshing taste of the product? Rate on a scale from 1 (extremely not refreshing) to 7 (Extremely refreshing)
2) To what extend do you agree or disagree that this product thirst quenching? Rate on a scale from 1 (disagree strongly) to 5 (agree strongly)
3) What is your overall opinion of the texture of this product? Rate on a scale from 1 (extremely poor) to 7 (Excellent)

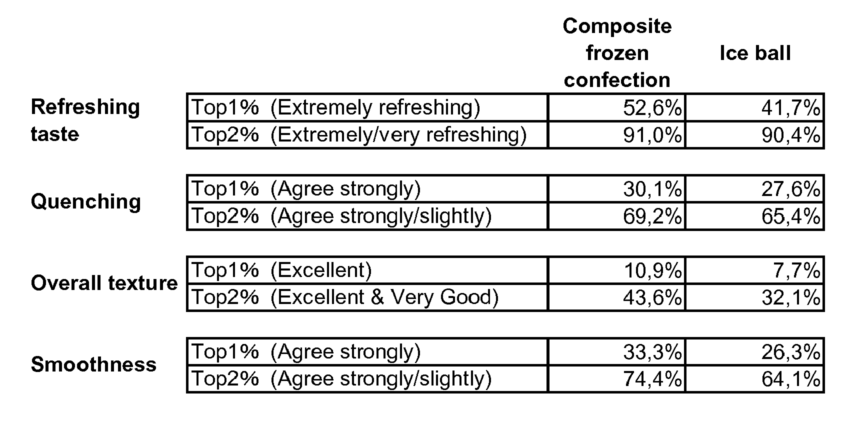

## Claims

1. A composite frozen confectionery comprising
a) a soft aerated ice confection core, wherein the maximum force used to penetrate a knife in the aerated ice confection at -10°C is 100 Newton, preferably 50 Newton, and more preferably 20 Newton; and
b) an aqueous-based ice crispy shell, substantially free of sugars and fat.

2. A composite frozen confection according to claim 1, **characterised in that** the ice confection core includes a refreshing block.

3. A composite frozen confectionery according to claim 1 or 2, **characterised in that** the ice confection core is a sorbet.

4. A composite frozen confectionery according to claim 1 or 2, in the form of a bite-sized product, with a volume comprised between 2 and 10 ml.

5. A composite frozen confection according to claim 4, in the form of a drop, sphere, cylinder, cube, pyramid, stick, triangle, diamond/losange, or cone.

6. A composite frozen confectionery according to claim 1 or 2, wherein the refreshing block comprises at least one salivating agent and at least one cooling agent, in a weight ratio of 1:0.05 to 1:0.2, preferably 1:0.11 to 1:0.16 respectively.

7. A composite frozen confectionery according to claim 6, wherein the salivating agent is selected from a mixture of compounds comprising at least one organic acid selected from the group of adipic, ascorbic, citric, fumaric, lactic, malic and tartaric acids.

8. A composite frozen confectionery according to claim 6, wherein the cooling agent is selected from menthol derivative compounds, acyclic and/or cyclic carboxamides, N-substituted paramenthane carboxamides, phosphine oxides, substituted p-menthanes, menthoxypropane, alpha-keto enamine derivatives, N-substituted p-menthane carboxamide, menthyl half acid ester derivatives and cubebol.

9. A composite frozen confectionery according to claim 6 wherein the refreshing block further comprises a tingling agent.

10. A composite frozen confectionery according to claim 9, wherein the tingling agent is selected from plant extracts which include extracts from pepper, onion, garlic, radish, horseradish, mustard, chilli and ginger.

11. A composite frozen confectionery according to claim 10, wherein the tingling agent is selected from Szechuan pepper extract.

12. A composite frozen confectionery according to claim 6, wherein the salivating agent is present in an amount of 0.1-0.5 wt%, preferably 0.25-0.4 wt%, more preferably 0.28-0.35 wt%, with respect to the weight of the ice confection core.

13. A composite frozen confectionery according to claim 6, wherein the cooling agent is present in an amount of 0.01-0.1 wt%, preferably 0.02-0.05 wt%, more preferably 0.02-0.045 wt%, even more preferably 0.03-0.045 wt%, most preferably 0.032-0.045 wt%, with respect to the weight of the ice confection core.

14. A composite frozen confectionery according to claim 6, wherein the refreshing block comprises a mixture of malic acid and citric acid.

15. A composite frozen confectionery according to claim 1 or 2, wherein the shell consists in an ice water layer.

16. A composite frozen confectionery according to claim 1 or 2, wherein the shell comprises water, flavour, colour and stabiliser.

17. A composite frozen confectionery according to claim 1 or 2, wherein the shell has a thickness comprised between 300 and 600 µm.

18. A composite frozen confectionery according to claim 1 or 2, further comprising a layer of ice crystals bigger than 1 mm covering the shell.

19. A method for the manufacture of a composite frozen confectionery as defined in claim 1 or 2, comprising the steps of:
i. Providing an ingredients mix for an ice confection preferably comprising a refreshing block
ii. Freezing the mix and providing a degree of overrun comprised between 20 and 200%;
iii. Dosing portions of the frozen confection with a defined shape
iv. Hardening the frozen ice confection
v. Applying an aqueous-based coating covering the ice confection to provide a composite confectionery
vi. Hardening the composite confectionery

20. A method according to claim 19, wherein the dosing step is performed via an extruder equipped with a dosing device.

21. A method according to claim 19, wherein the aqueous-based coating is applied by enrobing, dipping, showering, water fall or spraying.

22. A method according to claim 19, wherein the aqueous-based coating is applied by bottoming or water fall.

23. A method according to claim 19 wherein step iv) is followed by providing the composite frozen confection with an additional layer of ice crystals.
